# EUROPÄISCHE PATENTANMELDUNG

(11) **EP 2 226 693 A1**
(43) Veröffentlichungstag der Anmeldung: **08.09.2010**
(21) Anmeldenummer: 09003229.3
(22) Anmeldetag: 05.03.2009
(51) Int. Cl.: G05B 19/042, G05B 19/418, H04L 12/24

(54) **Programmiergerät zur Projektierung einer Kommunikationsverbindung zwischen Automatisierungskomponenten in einer industriellen Automatisierungsanordnung**

(71) Anmelder: SIEMENS AKTIENGESELLSCHAFT, 80333 München (DE)
(72) Erfinder: Munoz Ibarra, Pablo, 91058 Erlangen (DE); Mütze, Claudia Lisette, 92353 Postbauer-Heng (DE)

(57) **Zusammenfassung**

Die Erfindung betrifft ein Programmiergerät zur Projektierung einer Kommunikationsverbindung in einer industriellen Automatisierungsanordnung, wobei das Programmiergerät zur benutzerseitigen Auswahl zumindest einer ersten Automatisierungskomponente (AK1,...,AK5) eingerichtet ist, das Programmiergerät zur benutzerseitigen Eingabe mindestens einer gewünschten Eigenschaft der Kommunikationsverbindung (KV1, KV2) ausgebildet ist. Dabei ist das Programmiergerät zur Bestimmung, Anzeige oder Hervorhebung derjenigen der Automatisierungskomponenten (AK1,...,AK5), die zum Betrieb einer der gewünschten Eigenschaft entsprechenden Kommunikationsverbindung (KV1, KV2) mit der ersten Automatisierungskomponente (AK1,...,AK5) geeignet ist oder sind, eingerichtet. Nach Eingabe einer Selektion einer dieser bestimmten, angezeigten oder hervorgehobenen Automatisierungskomponenten (AK1,...,AK5) ist das Programmiergerät zur Bestimmung von Verbindungsparametern zu der Kommunikationsverbindung (KV1, KV2) zwischen der ersten und der ausgewählten der Automatisierungskomponenten (AK1,...,AK5) eingerichtet ist, und zur Zuordnung der Verbindungsparameter zu den an der Kommunikationsverbindung (KV1, KV2) zu beteiligenden Automatisierungskomponenten (AK1,...,AK5) ausgebildet. Dadurch kann das Programmiergerät bei der Auswahl geeigneter Kommunikationspartner eine Assistenzfunktionalität ausführen.

## Beschreibung

Die Erfindung betrifft ein Programmiergerät zur Projektierung einer Kommunikationsverbindung zwischen Automatisierungskomponenten gemäß dem Oberbegriff des Patentanspruchs 1.

Automatisierungskomponenten in industriellen Automatisierungsanordnungen sind regelmäßig über Datenleitungen oder mittels Datennetzen miteinander verbunden. Über die Datenleitungen oder Datennetze tauschen die Automatisierungskomponenten, also Sensoren, Aktoren, Rechner, Controller, Datenbanken, Steuerungssysteme etc. Daten miteinander aus. Diese Daten können beispielsweise Messwerte, Befehle, Abfragemeldungen oder sonstige Nachrichten sein.

Die Anordnung der Automatisierungskomponenten innerhalb der Automatisierungsanordnung und die Interaktion zwischen den Automatisierungskomponenten werden zumeist an Bildschirmarbeitsplätzen manuell oder teilautomatisch vorgenommen; dieser Vorgang wird als ein erster Schritt einer "Projektierung" oder eines "Engineerings" bezeichnet. Die bei der Projektierung behandelten Automatisierungskomponenten werden meist als Funktionsblöcke in einer Geräte-Netzwerk-Übersicht dargestellt, wobei jeder Funktionsblock in der Regel eine logische Einheit darstellt. Ein solcher Funktionsblock kann genau einem realen Hardware-Baustein entsprechen, es kann aber auch in vielen Fällen ein realer Hardware-Baustein gemäß seiner technischen Funktionalität durch eine Vielzahl von Funktionsblöcken repräsentiert werden, oder umgekehrt.

Bei der Projektierung werden die Funktionsblöcke zunächst gemäß der gewünschten Funktionalität der Automatisierungsanordnung manuell miteinander verschaltet (verbunden); dafür kann eine Benutzeroberfläche, die sog. Geräte-Netzwerk-Übersicht, eines Programmiergerätes verwendet werden. Anschließend wird mittels einer weiteren Funktion des Programmiergerätes, dem sog. Programmier-Editor, die Software für die programmierbaren Controller ("CPU") der Automatisierungsanordnung erstellt, wobei zu jedem an einer Kommunikationsverbindung beteiligten Funktionsblock sowohl ein Programmbaustein (der sog. "Kommunikationsbaustein") als auch ein zugeordneter Datenblock (Datensatz) mit Verbindungsparametern vorgesehen wird, wobei die Verbindungsparameter beim Betrieb der Automatisierungsanordnung bzw. der Automatisierungskomponenten den Kommunikationsbausteinen zur Verfügung stehen und die Arbeitsweise dieser festlegen.

Für den Nachrichten- oder Datenaustausch zwischen den Automatisierungskomponenten müssen diese zum Einen, wie bereits erwähnt, die notwendigen physikalischen Voraussetzungen mitbringen, d. h. insbesondere, dass diese an einer gemeinsamen Datenleitung oder einem Datennetz angeschlossen sind. Insbesondere im Beispiel der Datennetze muss jede an einer Kommunikationsverbindung beteiligte Komponente zusätzlich noch mit Software (den erwähnten Kommunikationsbausteinen) und Verbindungsparametern ausgestattet werden, wobei die Verbindungsparameter derart gewählt sein müssen, dass die zumindest zwei an einer Kommunikationsverbindung beteiligten Automatisierungskomponenten auch tatsächlich eine funktionsfähige Verbindung miteinander aufbauen können. So arbeitet beispielsweise das "Internet-Protokoll" mit IP-Adressen, wobei sich die IP-Adressen der beteiligten Kommunikationspartner zwar voneinander unterscheiden müssen, aber demselben Subnetz angehören müssen. Neben den IP-Adressen muss auch eine Vielzahl weiterer Verbindungsparameter derart gewählt werden, dass eine funktionsfähige Kommunikationsverbindung aufgebaut werden kann. Wie am Beispiel der IP-Adressen beschrieben, müssen die Datensätze mit den Verbindungsparametern der einzelnen Kommunikationspartner jeweils an die Verbindungsparameter des jeweils anderen Kommunikationspartners angepasst sein.

Es ergibt sich daraus im Stand der Technik die Herausforderung, dass bei der Projektierung bzw. der damit verbundenen Programmierung und Parametrisierung einer Kommunikationsverbindung zwischen Automatisierungskomponenten jeweils nur "kompatible", d.h. zueinander passende, Automatisierungskomponenten miteinander verschaltet werden dürfen, wobei diesbezüglich bei einer großen Anzahl projektierter Geräte und Komponenten ein hoher manueller Aufwand dafür betrieben werden muss, die zueinander passenden Kommunikationspartner auszuwählen bzw. die Verbindung nicht-kompatibler Kommunikationspartner zu verhindern. Weiter besteht die Herausforderung, dass in einem weitverzweigten Netz an Automatisierungs- und Kommunikationskomponenten eine geeignete Route für Daten gewählt werden muss. Möglicherweise müssen auch weitere Komponenten, beispielsweise Router, Repeater, Switche etc., der Anordnung zugefügt werden, um überhaupt erst eine Kommunikationsverbindung aufbauen zu können. Einer weitere Herausforderung besteht darin, dass bei einer Änderung einer Automatisierungskomponente, beispielsweise bei einem Austausch durch eine neue Komponente anderen Typs, die mit die Komponente eingerichteten Kommunikationsverbindungen zumindest teilweise neu projektiert bzw. parametrisiert werden müssen.

Zusammengefasst ergibt sich bei der gebräuchlichen Projektierung von Kommunikationsverbindungen in Automatisierungsanordnungen der Nachteil, dass diese einen hohen, meist manuellen Aufwand erfordert und zudem fehleranfällig ist, weil an mehreren Stellen der Projektierung zueinander passende Komponenten ausgewählt und Parameter bestimmt werden müssen.

Es ist also eine Aufgabe der vorliegenden Erfindung, die Projektierung von Kommunikationsverbindungen zwischen Automatisierungskomponenten zu vereinfachen und dabei die Fehlerquote zu verringern.

Die Aufgabe wird durch ein Programmiergerät gemäß dem Patentanspruch 1 gelöst.

Die Erfindung macht sich zu Nutze, dass in den Projektierungsdaten einer industriellen Automatisierungsanordnung zumeist über die an der Kommunikationsverbindung zu beteiligenden Automatisierungskomponenten Informationen vorliegen, die für die Auswahl von passenden Kommunikationspartnern und Verbindungsparametern wichtig sind. Darüber hinaus sind in den Projektierungsdaten meist auch Informationen über das verwendete Datennetzwerk enthalten. Es ist ein zentraler Gedanke der Erfindung, diese bereits vorliegenden Informationen automatisch auszuwerten und damit die passenden Kommunikationspartner und Verbindungsparameter-Sätze der betroffenen Automatisierungskomponenten weitgehend oder vollständig und möglichst vollautomatisch zu bestimmen.

Zur Lösung der Aufgabe wird ein Programmiergerät zur Projektierung einer Kommunikationsverbindung zwischen zumindest zwei Automatisierungskomponenten in einer industriellen Automatisierungsanordnung vorgeschlagen, mit einer graphischen Benutzeroberfläche zur Darstellung mehrerer oder aller der Automatisierungskomponenten, wobei die Benutzeroberfläche zur benutzergeführten Projektierung der Kommunikationsverbindung und zur Programmierung und zur Parametrisierung der an der Kommunikationsverbindung zu beteiligenden Automatisierungskomponenten eingerichtet ist. Dabei ist das Programmiergerät zur benutzerseitigen Auswahl zumindest einer ersten Automatisierungskomponente eingerichtet ist, zur benutzerseitigen Eingabe mindestens einer gewünschten Eigenschaft der Kommunikationsverbindung ausgebildet, und zur Bestimmung, Anzeige oder Hervorhebung derjenigen der Automatisierungskomponenten, die zum Betrieb einer der gewünschten Eigenschaft entsprechenden Kommunikationsverbindung mit der ersten Automatisierungskomponente geeignet ist oder sind, eingerichtet. Das Programmiergerät ist weiter zur Eingabe einer Selektion einer dieser bestimmten, angezeigten oder hervorgehobenen Automatisierungskomponenten ausgebildet und zur Bestimmung von Verbindungsparametern zu einer Kommunikationsverbindung zwischen der ersten und der ausgewählten der Automatisierungskomponenten eingerichtet. Damit ist das Programmiergerät zur Zuordnung der Verbindungsparameter zu den an der Kommunikationsverbindung zu beteiligenden Automatisierungskomponenten in der Lage. Es ist ein Vorteil eines derartigen Programmiergerätes, dass insbesondere bei Automatisierungsanordnungen mit einer Vielzahl von Automatisierungskomponenten bei der Projektierung einer Kommunikationsverbindung ausgehend von der ersten ausgewählten Automatisierungskomponente nur diejenigen anderen Automatisierungskomponenten dargestellt bzw. hervorgehoben werden, die überhaupt zum Eingehen einer Kommunikationsbeziehung gemäß den geforderten Eigenschaften in der Lage sind. Dadurch wird die Übersichtlichkeit erhöht und zudem wird vermieden, dass Kommunikationsbeziehungen bzw. Kommunikationsverbindungen zwischen "inkompatiblen" Kommunikationspartnern projektiert werden.

Vorteilhafte Ausgestaltungen des erfindungsgemäßen Programmiergerätes sind in den abhängigen Patentansprüchen angegeben.

Eine grundlegende Eigenschaft einer zu projektierenden Kommunikationsverbindung stellt der Verbindungstyp bzw. das zur Verwendung beabsichtigte Kommunikationsprotokoll dar; vorteilhafter Weise werden diese grundlegenden Eigenschaften zur Filterung der darzustellenden möglichen Kommunikationspartner verwendet. Vorteilhaft werden dabei auf der Benutzeroberfläche auch bevorzugte oder alle gemäß den gewählten Eigenschaften möglichen Verbindungswege aufgezeigt; in den Fällen, in denen mehrere Verbindungswege technisch möglich sind, gibt die Benutzeroberfläche vorteilhaft eine Auswahlmöglichkeit zur Selektion eines dieser Verbindungswege aus. In einer weiteren vorteilhaften Ausgestaltung können die verschiedenen möglichen Verbindungswege auch in einer Rangfolge angeordnet bzw. mit einer Priorisierung angezeigt werden. Damit ist es beispielsweise möglich, gestaffelt nach Bandbreite, Reaktionszeiten, Laufzeiten, Verzögerungen, Verbindungskosten, Verbindungsauslastung und anderer vom Benutzer vorgebbarer Kriterien eine von Fall zu Fall optimale Auswahl des Verbindungsweges zu treffen.

Die Projektierung einer industriellen Automatisierungsanordnung und damit auch der darin gewünschten Kommunikationsverbindungen ist im Allgemeinen ein interaktiver Prozess, bei dem häufig nachträgliche Korrekturen und Anpassungen vorgenommen werden müssen. Dem wird Rechnung getragen, indem das Programmiergerät zur erneuten Bestimmung und Zuordnung der Verbindungsparameter der beabsichtigten Kommunikationsverbindung in den Fällen eingerichtet ist, in denen eine Änderung zumindest einer der an der Kommunikationsverbindung zu beteiligenden Automatisierungskomponenten und/oder die Änderung der zumindest einen gewünschten Eigenschaft erfolgt. Darüber hinaus ist das Programmiergerät vorteilhaft zur Anzeige und/oder Korrektur inkonsistenter, fehlerhafter oder fehlender Verbindungsparameter eingerichtet, wodurch einem Benutzer, insbesondere in Fällen einer nachträglichen Änderung einer Konfiguration, die Pflege der Verbindungsparameter erleichtert oder sogar erspart wird. In diesem Zusammenhang ist das Programmiergerät auch vorteilhaft zur Anzeige von Status-Informationen, beispielsweise per Status- oder Diagnose-Icons, sog. ToolTips oder Klartext-Informationen eingerichtet, welches entweder einer an der beabsichtigten Kommunikationsverbindung beteiligten Automatisierungskomponente oder der Kommunikationsverbindung als solcher zugeordnet ist. Dieses Statusfenster gibt einfach und übersichtlich Auskunft über die Funktionsfähigkeit der geplanten Kommunikationsverbindung bzw. über mögliche Fehlerursachen, beispielsweise falsche oder fehlende Verbindungsparameter etc.. Vorteilhaft kann das Statusfenster auch im laufenden Betrieb der Automatisierungsanordnung zur Überwachung der Kommunikationsverbindung eingesetzt werden.

Ein separater Programmierungsschritt im Zusammenhang mit der Projektierung der Kommunikationsverbindung kann entfallen, wenn das Programmiergerät zur automatischen Auswahl und Zuordnung von für die Kommunikationsverbindung jeweils erforderlichem Programmcode (sog. "Kommunikationsbausteine") zu den an der Kommunikationsverbindung zu beteiligenden Automatisierungskomponenten eingerichtet ist; dies kann analog zu der automatischen Zuweisung der Verbindungsparameter (sog. "Bausteine") erfolgen.

In vielen Fällen reichen die bereits projektierten Automatisierungskomponenten bzw. sonstigen Bausteine der Automatisierungsanordnung nicht aus, um eine den geforderten Eigenschaften entsprechende Kommunikationsverbindung aufbauen zu können bzw. einen passenden Verbindungsweg zu finden. In solchen Fällen ist das Programmiergerät vorteilhaft derart ausgestaltet, dass es aus einer Datenbank mit weiteren verfügbaren Komponenten zumindest eine passende Komponente, beispielsweise einen Router, einen Switch, ein Netzwerkelement etc., auswählt und zur Anzeige auf der Benutzeroberfläche bringt. Vorteilhaft wird diese Komponente bereits automatisch in einen möglichen Verbindungsweg eingefügt, projektiert und parametrisiert und somit vollautomatisch Bestandteil der geplanten Kommunikationsverbindung.

Ein Ausführungsbeispiel des erfindungsgemäßen Programmiergerätes wird nachfolgend anhand der Zeichnungen erläutert.

Dabei zeigen:
- Figur 1: eine schematisch dargestellte Automatisierungsan ordnung auf der Benutzeroberfläche eines Program miergerätes, und
- Figur 2: einen Eingabe-Dialog mit vorgegebenen Verbin dungsparametern der beiden Automatisierungskompo nenten.

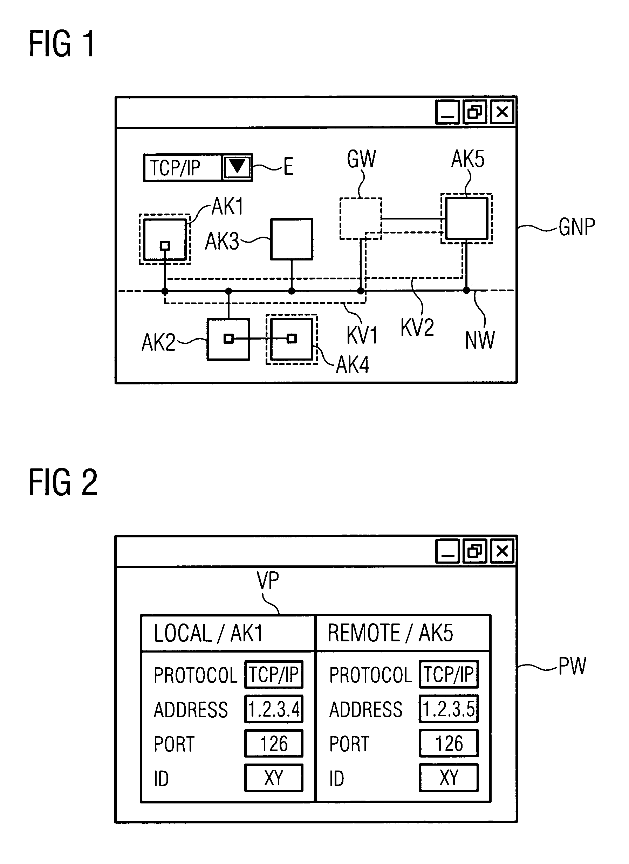

In der Figur 1 ist schematisch die Benutzeroberfläche GNP (Geräte-Netzwerk-Projektierung) eines Projektierungs- und Programmiergerätes (Engineering-Tool) einer industriellen Automatisierungsanordnung dargestellt. Dabei sollen zwei der industriellen Automatisierungskomponenten AK1,...,AK5 mittels einer Kommunikationsverbindung KV1, KV2 miteinander verbunden werden. Bei den Automatisierungskomponenten AK1,...,AK5 handelt es sich um mikroprozessorgesteuerte Einheiten, welche über ein Datennetz (hier: Industrial Ethernet) miteinander verbunden sind; alternativ könnte beispielsweise auch ein MPI- oder ein Profibus-Netzwerk verwendet werden.

Im Folgenden sei angenommen, dass ein Benutzer die Automatisierungskomponente AK1, beispielsweise eine Messwerterfassungseinrichtung, mit einer Datensenke, beispielsweise einer Überwachungseinrichtung, verbinden will. Dazu gibt der Benutzer in einer Eingabeeinrichtung E, hier: eine sog. "Combobox", ein gewünschtes Kommunikationsprotokoll als Eigenschaft der geplanten Kommunikationsverbindung vor. Im vorliegenden Fall will der Benutzer eine gesicherte Übertragung sicherstellen und wählt daher das TCP/IP-Protokoll aus. Ferner markiert der Benutzer in der Geräte-Netzwerk-Projektierung GNP, der hier genutzten Benutzeroberfläche, die Automatisierungskomponente AK1 als ersten Kommunikationspartner der geplanten Kommunikationsverbindung.

Das Programmiergerät greift nun auf die Projektierungsdatenbank zu und überprüft, ob die Automatisierungskomponente AK1 überhaupt das TCP/IP-Protokoll verarbeiten kann. Danach werden ebenfalls anhand der Informationen aus der Projektierungsdatenbank alle Automatisierungskomponenten AK1, AK4 und AK5 bestimmt und markiert, die ebenfalls diese Eigenschaft aufweisen; dies ist in der Figur 1 anhand gestrichelter Umrandungen der Automatisierungskomponenten AK1, AK4 und AK5 dargestellt. Ebenso wird das Netzwerk NW (Industrial Ethernet) ermittelt und dargestellt, an welchem die Automatisierungskomponente AK1 angeschlossen ist und welches der geforderten Eigenschaft entspricht, nämlich für Nachrichten des TCP/IP-Protokolls geeignet ist.

Nun wählt der Benutzer beispielsweise die Automatisierungskomponente AK5 als Kommunikationspartner für die Automatisierungskomponente AK1 aus.

In einem optionalen Schritt ermittelt das Programmiergerät jetzt die möglichen Verbindungswege für die Kommunikationsverbindungen KV1, KV2 und stellt diese (hier: gestrichelt) dar. Die hier vorliegende Besonderheit ist, dass die Automatisierungskomponente AK5 an einem weiteren Industrial Ethernet angeschlossen ist und neben dem direkten Verbindungsweg der Kommunikationsverbindung KV2 auch ein indirekter Verbindungsweg gemäß der Kommunikationsverbindung KV1 möglich ist, sofern ein zusätzliches Gateway GW vorgesehen wird; dies schlägt das Programmiergerät durch die (gestrichelte) Darstellung des Gateways GW vor. Eine solche Suche nach alternativen Verbindungswegen kann entweder auf Anforderung des Benutzers oder grundsätzlich erfolgen. In den Fällen, in denen der direkte Anschluss der Automatisierungskomponente AK5 an das Netzwerk NW nicht gegeben wäre oder Einschränkungen unterliegen würde (beispielsweise einer in den Eigenschaften vorgegebenen Bandbreite nicht genügt), würde automatisch nur der Verbindungsweg gemäß der Kommunikationsverbindung KV1 mit dem automatisch projektierten Gateway GW angezeigt.

Im Folgenden sei angenommen, dass der Benutzer den Verbindungsweg der Kommunikationsverbindung KV2 auswählt; das Gateway GW und der Verbindungsweg gemäß der Kommunikationsverbindung KV1 wird dann ausgeblendet.

Um eine auf dem Verbindungsweg der Kommunikationsverbindung KV2 zwischen den Automatisierungskomponenten AK1,...,AK5 aufbauen zu können, muss die auf die Automatisierungskomponenten AK1, AK5 jeweils zu ladende Betriebssoftware mit entsprechenden Programmroutinen versehen werden, welche die entsprechende Funktionalität für eine protokollkonforme Kommunikation zur Verfügung stellen. Die erforderliche Software wird dabei der jeweiligen Automatisierungskomponente AK1, AK5 auf einer (nicht dargestellten) Benutzeroberfläche, dem sog. "Programmiereditor", des Programmiergerätes zugeordnet, indem ein sog. "Kommunikationsbaustein" der entsprechenden Automatisierungskomponente AK1, AK2 jeweils zugeordnet wird. Damit ist sichergestellt, dass bei der Inbetriebnahme der Automatisierungsanordnung die entsprechenden Programmroutinen (Source-Code) zusammen mit den anderen erforderlichen Software-Routinen kompiliert, gebunden und in den Programmspeicher der jeweiligen Automatisierungskomponente AK1, AK5 geladen werden.

Neben der für den Betrieb einer Kommunikationsverbindung auf dem Verbindungsweg KV2 erforderlichen Software, den beschriebenen Programmbausteinen (auch "Kommunikationsbausteine" genannt), müssen die Automatisierungskomponenten AK1, AK5 jeweils mit einem Datensatz ("Datenbaustein") versehen werden, der die für eine Kommunikationsverbindung auf dem Verbindungsweg KV2 erforderlichen Verbindungsparameter umfassen. In dem jeweiligen Datensatz ist auch festgelegt, welche Art von Kommunikationsverbindung (hier die bereits als Eigenschafts-Kriterium ausgewählte TCP/IP-Verbindung) aufgebaut werden soll; er gibt also beispielsweise das Kommunikationsprotokoll und eine Verbindungsart an. Aufgrund der projektierten Kommunikationsverbindung wird beim anschließenden Kompilieren für die Automatisierungskomponenten AK1, AK5 jeweils ein solcher Datensatz angelegt. Sowohl für das Anfügen eines Programmbausteins (Kommunikationsbausteins) als auch für das Anlegen und Befüllen eines Datenbausteins kann die Benutzeroberfläche des verwendeten Programmiergerätes (in den Figuren nicht dargestellt) unterschiedliche Bedienkonzepte unterstützen, wobei im Folgenden ein schrittweises Bedienkonzept vorgestellt werden soll; alternativ kann auch ein sog. "Wizard" oder ein anderes Bedienkonzept verwendet werden. Dabei werden die Verbindungsparameter für die Datensätze mit den Verbindungsparametern weitgehend automatisch aus den Projektierungsdaten gewonnen und dem Benutzer automatisch bereitgestellt.

Ein Anwender fügt zunächst einen Kommunikationsbaustein (z.B. einen sog. "BSEND" oder "PUT"-Baustein) auf der grafischen Programmieroberfläche des Programmiergerätes an das Software-Netzwerk eines Programmbausteins der Automatisierungskomponente AK1 an; dasselbe geschieht mit einem Kommunikationsbaustein an dem Software-Netzwerk des Programmbausteins der Automatisierungskomponente AK5.

In der Sicht der Geräte-Netzwerk-Projektierung GNP wird nun die grafische Projektierung der Kommunikationsverbindung KV vorgenommen. Es wird automatisch in der Sicht der Geräte-Netzwerk-Projektierung GNP ein Eingabedialog für die Verbindungsparameter VP dargestellt; dabei sind die Verbindungsparameter der ersten Automatisierungskomponente AK1 unter den Begriff "LOCAL" zusammengefasst, während die Verbindungsparameter der Automatisierungskomponente AK5 in einem Feld "REMOTE" dargestellt sind. Im vorliegenden Beispiel ist es eine Konvention, dass die derzeit zu programmierende Komponente (hier: Automatisierungskomponente AK1) als "local" bezeichnet wird, und die damit im Zusammenhang stehende "entfernte" Komponente (hier: Automatisierungskomponente AK5) als "remote". In der Praxis bietet sich an, durchgängig im Projekt eindeutige Bezeichnungen zu verwenden.

In der Eingabemaske VP werden vom Anwender auszufüllende Parameter deutlich hervorgehoben, beispielsweise durch eine rote Hinterlegung des Eingabefeldes. Entsprechend sind solche Parameter, die unvollständig ausgefüllt sind oder zu einer nicht-funktionierenden Kommunikationsverbindung führen würden, ebenfalls in einem solchen Eingabedialog VP automatisch markiert.

Im vorliegenden Ausführungsbeispiel greift das Programmiergerät auf die Projektierungsdaten der Automatisierungskomponenten AK1, AK5 zu und stellt fest, dass beide aufgrund ihrer technischen Ausstattung und aufgrund der Spezifikation des zur Verfügung stehenden Datennetzwerkes verschiedene Kommunikationsprotokolle unterstützen, hier beispielsweise TCP/IP, ISO on TCP, UDP, MPI oder PROFIBUS. Somit wird für den Anwender ein Auswahldialog dargestellt, bei dem er für die Automatisierungskomponente AK1 zwischen diesen Kommunikationsprotokollen auswählen kann; hier sei angenommen, dass das Programmiergerät die in den Eigenschaften geforderte Entscheidung für das TCP/IP-Protokoll übernimmt. Diese Auswahl übernimmt der Eingabedialog sowohl für die Automatisierungskomponente AK1, als auch für die Automatisierungskomponente AK5. Entsprechend werden als weitere Felder des Eingabedialogs VP die für das ausgewählte TCP/IP-Protokoll notwendigen Parameter, nämlich IP-Adresse, IP-Portnummer und eine interne Identifikationsnummer ("ID") dargestellt. Im Falle der Verwendung eines Gateways GW wird der Anwender nicht mit den Netzwerkadressen des verwendeten Gateways konfrontiert, da dem Programmiergerät diese Gateway-Netzwerkadressen aus den Konfigurationsdaten des Gateways GW automatisch bekannt sind; somit sind die Gateway-Adressen für einen Anwender transparent.

Das Programmiergerät entnimmt nun den Projektierungsdaten die Information, dass für das verwendete Netzsegment des hier verwendeten Industrial-Ethernet-Netzwerks das Netzwerk "1.2.3.X" (IP-Adressraum) mit der Subnetzmaske "255.255.255.0" vorgesehen ist. Dementsprechend gibt das Programmiergerät als IP-Adressen der Automatisierungskomponente AK1 die Adresse "1.2.3.4" und der anderen Automatisierungskomponente AK5 die IP-Adresse "1.2.3.5" vor. Sollte es hierbei zu Konflikten kommen, beispielsweise in den Fällen, in denen nicht mehr genügend IP-Adressen in dem benutzten Netzsegment frei sind, würde die entsprechende Zeile des Eingabedialogs VP entsprechend markiert werden. Analog zu dem Vorgenannten gibt das Programmiergerät auch die IP-Portnummer und die Identifikationsnummer vor, wobei jeweils in den Fällen, in denen eine Alternative besteht, ein entsprechender Auswahldialog, eine Auswahlmöglichkeit oder ein Hinweis ausgegeben wird, und wobei in den anderen Fällen ein passender Wert vorbelegt wird.

Durch das vorgenannte Verfahren wird ein Anwender (Programmierer) systemautomatisch zur Projektierung des Kommunikationspartners, der Kommunikationsverbindung KV1, KV2 und der erforderlichen Kommunikationsparameter geführt. Die Vorgehensweise ist unabhängig von der Art des verwendeten Kommunikationsbausteins oder des verwendeten Kommunikationsprotokolls. Dabei werden die in einer Projektdatenablage (Projektierungsdaten) verfügbaren Konfigurationsdaten der projektierten Geräte und deren Eigenschaften automatisch verwendet. Nachdem der Anwender einen Kommunikationspartner zu einer zuerst betrachteten Automatisierungskomponente selektiert hat, belegt das System automatisch die aus den vorliegenden Konfigurationsdaten gewonnen Verbindungsparameter vor, beispielsweise die Interface-Informationen der Kommunikationspartner, die Subnetzanschlüsse der Kommunikationspartner und die Teilnehmeradressen der Kommunikationspartner. Sofern die Kommunikationspartner noch nicht mit einem Datennetz NW verbunden sind, wird systemautomatisch die erforderliche Vernetzung aufgrund des angegebenen Protokolltyps der Kommunikationsverbindung KV1, KV2 erzeugt.

Fehlerhafte Werteangaben werden durch Validierungen des Systems verhindert. Dabei werden systemautomatisch sinnvolle Default-Werte für die Kommunikationsparameter angegeben, beispielsweise ein sinnvolles Kommunikationsprotokoll je nach ausgewähltem Kommunikationspartner. An einer einzigen Stelle in der Projektiermaske, beispielsweise bei der Programmerstellung für die Automatisierungskomponente AK1, wird für beide Kommunikationspartner, also auch für die Automatisierungskomponente AK5, die Kommunikationsverbindung "beidseitig" projektiert und parametrisiert.

Weiter ist erfindungsgemäß vorgesehen, dass aus den (weitgehend automatisch) projektierten Parametern der Kommunikationsverbindung eine "offline"-Statusanzeige von inkonsistenten Kommunikations-Parametern generiert wird, welche sich beispielsweise aus zwischenzeitlichen Konfigurations-Änderungen der Automatisierungskomponenten AK1, AK5 nachträglich für schon projektierte Kommunikationsverbindungen ergeben können. Damit erhält ein Anwender eine Bedienerführung, mit der er schnell die Fehler verursachenden oder fehlenden Verbindungsparameter findet. Somit erhält er durch diese Systemunterstützung die Möglichkeit, schnell inkonsistente Verbindungen zu korrigieren, damit sich nach Download der Baustein- und Verbindungs-Konfiguration zügig eine funktionierende Kommunikation ergibt. Das lange Suchen nach den möglichen Fehlerursachen entfällt somit für den Anwender; ein Expertenwissen über kommunikationstechnisches Hintergrund-Know-How ist somit für den Anwender nicht mehr erforderlich.

## Patentansprüche

1. Programmiergerät zur Projektierung einer Kommunikationsverbindung (KV1, KV2) zwischen zumindest zwei Automatisierungskomponenten (AK1,...,AK5) in einer industriellen Automatisierungsanordnung,
mit einer graphischen Benutzeroberfläche (GNP) zur Darstellung mehrerer oder aller der Automatisierungskomponenten (AK1,...,AK5), wobei
die Benutzeroberfläche (GNP) zur benutzergeführten Projektierung der Kommunikationsverbindung (KV1, KV2) und zur Programmierung und zur Parametrisierung der an der Kommunikationsverbindung (KV1, KV2) zu beteiligenden Automatisierungskomponenten (AK1,...,AK5) eingerichtet ist,
**dadurch gekennzeichnet, dass**
- das Programmiergerät zur benutzerseitigen Auswahl zumindest einer ersten Automatisierungskomponente (AK1,...,AKS) eingerichtet ist,
- das Programmiergerät zur benutzerseitigen Eingabe mindestens einer gewünschten Eigenschaft der Kommunikationsverbindung (KV1, KV2) ausgebildet ist,
- das Programmiergerät zur Bestimmung, Anzeige oder Hervorhebung derjenigen der Automatisierungskomponenten (AK1,...,AK5), die zum Betrieb einer der gewünschten Eigenschaft entsprechenden Kommunikationsverbindung (KV1, KV2) mit der ersten Automatisierungskomponente (AK1,...,AK5) geeignet ist oder sind, eingerichtet ist,
- das Programmiergerät zur Eingabe einer Selektion einer dieser bestimmten, angezeigten oder hervorgehobenen Automatisierungskomponenten (AK1,...,AK5) ausgebildet ist,
- das Programmiergerät zur Bestimmung von Verbindungsparametern zu der Kommunikationsverbindung (KV1, KV2) zwischen der ersten und der ausgewählten der Automatisierungskomponenten (AK1,...,AK5) eingerichtet ist, und
- das Programmiergerät zur Zuordnung der Verbindungsparameter zu den an der Kommunikationsverbindung (KV1, KV2) zu beteiligenden Automatisierungskomponenten (AK1,...,AK5) ausgebildet ist.

2. Programmiergerät nach Patentanspruch 1,
**dadurch gekennzeichnet,**
**dass** die gewünschte Eigenschaft ein Verbindungstyp und/oder ein für die Kommunikationsverbindung (KV1, KV2) zu verwendendes Kommunikationsprotokoll ist.

3. Programmiergerät nach einem der vorhergehenden Patentansprüche,
**dadurch gekennzeichnet,**
**dass** die industrielle Automatisierungsanordnung eine Mehrzahl an Komponenten, welche zur Beteiligung an der Kommunikationsverbindung (KV1, KV2) geeignet sind, aufweist, wobei das Programmiergerät zur Ermittlung zumindest eines möglichen Verbindungsweges eingerichtet ist,
wobei das Programmiergerät in den Fällen, in denen mehrere unterschiedliche Verbindungswege verwendet werden können, zur Anzeige einer Auswahlmöglichkeit zur benutzerseitigen Selektion eines dieser Verbindungswege mittels der Benutzeroberfläche eingerichtet ist.

4. Programmiergerät nach einem der vorhergehenden Patentansprüche,
**dadurch gekennzeichnet,**
**dass** das Programmiergerät zur erneuten Bestimmung und Zuordnung der Verbindungsparameter in den Fällen eingerichtet ist, in denen eine Änderung zumindest einer der an der Kommunikationsverbindung (KV1, KV2) zu beteiligenden Automatisierungskomponenten (AK1,...,AK5) und/oder die Änderung der zumindest einen gewünschten Eigenschaft erfolgt.

5. Programmiergerät nach einem der vorhergehenden Patentansprüche,
**dadurch gekennzeichnet,**
**dass** das Programmiergerät zur Anzeige und/oder Korrektur inkonsistenter, fehlerhafter oder fehlender Verbindungsparameter eingerichtet ist.

6. Programmiergerät nach einem der vorhergehenden Patentansprüche,
**dadurch gekennzeichnet,**
**dass** das Programmiergerät zur Anzeige eines Status-Fensters zu zumindest einer an der Kommunikationsverbindung (KV1, KV2) zu beteiligenden Automatisierungskomponente (AK1,...,AK5) eingerichtet ist, wobei das Status-Fenster zumindest eine Angabe über eine Funktionsfähigkeit der projektierten Kommunikationsverbindung (KV1, KV2) umfasst.

7. Programmiergerät nach einem der vorhergehenden Patentansprüche,
**dadurch gekennzeichnet,**
**dass** das Programmiergerät in den Fällen, in denen für eine Kommunikationsverbindung (KV1, KV2) zwischen zwei ausgewählten Automatisierungskomponenten (AK1,...,AK5) eine weitere und noch nicht projektierte Komponente erforderlich ist, zur Auswahl zumindest eine passende Komponente aus einer Datenbank mit verfügbaren Komponenten und zur Anzeige dieser zumindest einen Komponente eingerichtet ist.
